# EUROPEAN PATENT SPECIFICATION

(11) **EP 1 935 259 B1**
(45) Date of publication and mention of the grant of the patent: **04.11.2009**
(21) Application number: 07023226.9
(22) Date of filing: 30.11.2007
(51) Int. Cl.: A23N 7/02

(54) **Device for peeling vegetables or fruit**
Vorrichtung zum Schälen von Gemüse oder Obst
Dispositif pour peler des légumes ou des fruits

(30) Priority: 18.12.2006 NL 1033081
(43) Date of publication of application: 25.06.2008
(73) Proprietor: Sormac B.V., 5916 PN Venlo (NL)
(72) Inventor: Christiaens, Wilhelmus J. A. M., 5872 AD Broekhuizen (NL)
(74) Representative: Bleukx, Lucas Lodewijk M.

(56) References cited:
- EP-A1- 0 133 593
- DE-A1- 2 153 804
- NL-A- 6 507 198
- US-A- 5 245 919

## Description

The invention relates to a device for peeling vegetables or fruit, comprising a drum-shaped body made up of a number of rectangular cutting plates provided with blades, a motor for rotatably driving of the drum-like body

An invention of this type is generally known and is marketed by, among others, the company Sormac bv as a "Blade peeler type MS". This type of peeling device is used in particular for peeling potatoes. A similar device, containing the features of the preamble of claim 1, is known from document DE-A-2 153 804.

During operation of this device the cutting plates rotate as it were under the product to be peeled in the drum-like body, the product thereby being peeled. While they are in the drum-like body it is important that the products can rotate so that they are completely peeled.

If there are too many products in the drum-like body or the products have particular shapes, for example an almost flat wall, the products tend to stay orientated in the same way in the drum-like body and are not completely peeled. The result is what is known as flat peeling where one side of the product is peeled almost flat and the rest is hardly peeled or not peeled at all.

The aim of the invention is to create a device of the above type in which these drawbacks are avoided.

This aim is achieved in accordance with the invention in that at least two adjacent plates are replaced by a single broad plate.

Through the presence of at least one such broad plate the force exerted on the products to be peeled is suddenly changed in magnitude and direction resulting in an increased tendency for the product to turn. It is important here that the regularity of the inner circumference of the drum-like body is interrupted. For this a broad plate can be used, but also a plate with any other differing geometry.

Other characteristics and advantage are explained on the basis of the following description whereby reference is made to the attached drawings.

In these:
Fig. 1 shows a schematic lateral section of a device in accordance with the invention
Fig. 2 shows a schematic cross-section of the drum-like body used in the device in accordance with the invention, and
Fig. 3 shows an unrolling of a section of the plates forming the drum-like body, seen from the inside

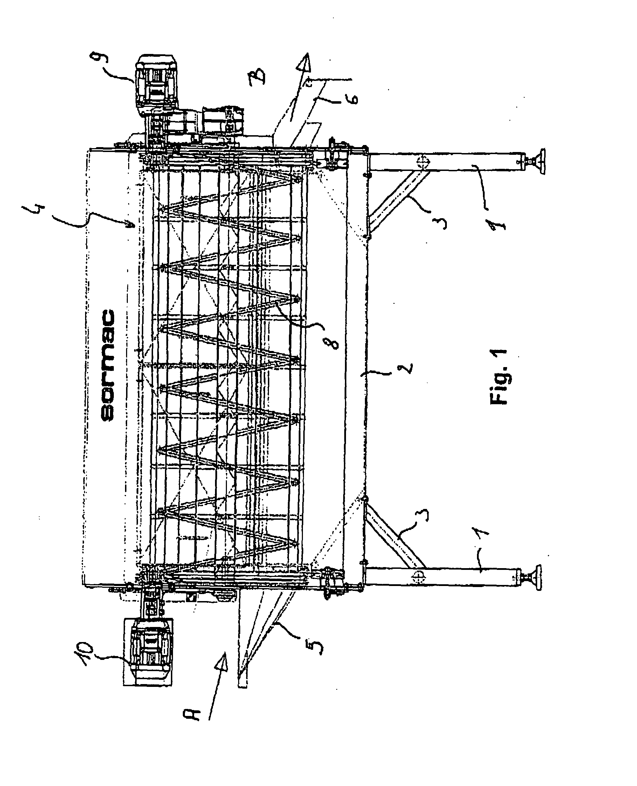

The device in accordance with the invention as shown in fig. 1 about a frame comprising four legs 1, cross connections 2 between the legs 1 and oblique connections 3 between the cross connections 2 and the legs 3 as is generally known for the building up of a frame.

Mounted on the frame is a drum-like body 4 that can be driven in a rotating manner by means of electric motors 9 and 10. The drum-like body is borne in the frame by way of a system that is described in more detail in European patent application 1 275 051.
In this way a flexible suspension of the drum-like body is achieved but the invention is not restricted to this type of suspension.

The drum-like body 4 has two open and accessible ends in which the products to be processed can be supplied at one end A, possibly using a supply chute 5, and can be removed at the other side B possibly using a removal chute 6. In order to transport the products from the supply end A to the removal end B the axial line of the drum-like body 4 can be placed at a angle, with the supply end A being higher than the removal end B so that as a result of gravity the products are transported from A to B.

However, in the illustrated form of embodiment a transport screw 8 in the form of an Archimedes screw has been selected that is coaxial to the drum-like body 4 and rotatably arranged therein and can be driven by a motor that is not shown here. Through the correct choice of direction and magnitude of the pitch as well as the external diameter of the screw 8 the products can be transported from A to B whereby the speed at which this takes place can be regulated by adjusting the rotation rate of the motor.

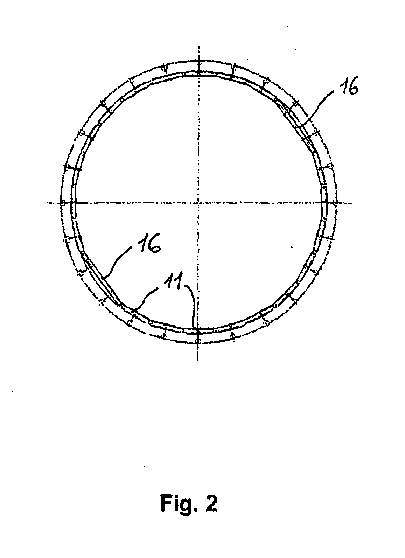

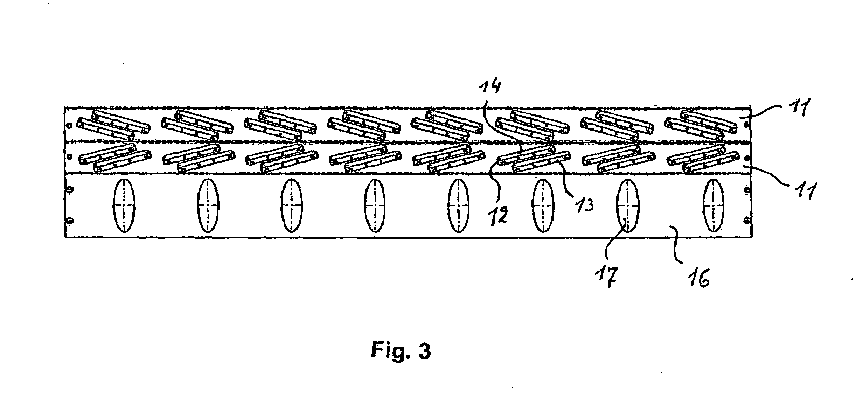

In the known device, named above as the "Sormac blade peeler type MS" the drum-like body 4 as shown in fig. 2 and 3 comprises a number of cutting plates 11. Each cutting plate 11 is formed by a rectangular plate in which a number of rectangular slits 12 are formed that are in parallel to each other and whereby a blade 13 can be mounted in each slit. The cutting edges of the blades 13 are practically in the inner surface of the cutting plates and leave space 14 for removing the peel of the products to be peeled.

Each cutting plate 11 is connected by its two longitudinal edges to an adjacent cutting plate 11 so that a polygonal drum-like body 4 is formed. Two adjacent blade plates are arranged in such a way that in each case their geometry is rotated 180°C with regard to each other as shown in fig. 3, whereby the blades are arranged in a corresponding manner in the slits 12. As the longitudinal edge of each slit 12 forms a sharp angle with the longitudinal edge of the cutting plate adjacent cutting plates 11 bring about a different cutting effect.

In practice a satisfactory result can be achieved with a peeling device of this type, but problems may occur due to so-called flat peeling whereby certain products have one surface that is peeled flat while the remainder is harldy peeled or not peeled at all. This happens when too many products are present in the drum-like body at the same time or when products accumulate in the drum-like body at one place and this accumulation is moved as an entity. It is also possible that some products are of such a shape and tend to stay in a certain position in the drum-like body in spite of the rotation and the translation movement brought about by the screw.

In order to avoid this effect and thereby improve the outcome of the peeling, in accordance with the invention one or more pairs of cutting plates 11 are replaced with a single flat plate 16. In the form of embodiment shown in fig. 2 two diametrically opposed pairs of cutting plates 11 are replaced by a flat plate 16, but it should be clear that in accordance with the invention a single pair of cutting plates can also be replaced, or more than two pairs can be replaced. In this way the distribution over the circumference of the drum-like body can be varied.

Through the presence of one or more plates 16 the regular polygon is converted into an irregular polygon. During rotation of the drum-like body this gives an additional impulse to the products to be peeled so that the tendency to flat peeling is reduced.

Preferably and as shown in fig. 3 on the inner surface of the flat plate 16 there are a number of recesses and bulges. These can be of various shapes but good results are obtained with recesses 17 that are oval when seen from above which in the perpendicular direction to the surface of the plate 16 can have an elliptical shape. This amplifies the effect of the plate during rotation.

It is clear that the invention is not restricted to the forms of embodiment that have been described and illustrated, but that within the scope of the claims numerous changes can be made that form part of the invention..

## Claims

1. Device for peeling vegetables or fruit comprising a drum-like body (4) that is built up of a number of adjacent rectangular cutting plates (11) provided with blades (13) and a motor (9,10) for rotatably driving the drum-like body, (4) **characterised**
**in that** at least two or more adjacent rectangular plate (11) are replaced with a single broad plate (16).

2. Device in accordance with claim 1, **characterised in that** the broad plate (16) has a dimension in the circumferential direction that largely corresponds with the dimension seen in the circumferential direction of the replaced cutting plates (11).

3. Device in accordance with claim 1 or 2 **characterised in that** the surface of the broad plates (16) facing the inside of the drum (4) is provided with bulges and/or recesses (17).

4. Device in accordance with claim 3, **characterised in that** each bulge and/or recess (17) seen in the direction perpendicular to the surface of the broad place (16) is largely egg-shaped.

5. Device in accordance with any one of the preceding claims, **characterised**
**in that** internally the drum-like body (4) is provided with an Archimedes screw (8) with a diameter that mainly corresponds with the internal diameter of the drum-like body (4)

6. Device in accordance with claim 5 **characterised in that** the Archimedes screw (8) is stationary.

7. Device in accordance with claim 5 **characterised in that** the Archimedes screw (8) is driven at a speed that differs from the rotation rate of the drum-like body (4).

8. Device in accordance with claim 4 and any one of claims 5, 6 or 7 **characterised in that** arranged on each broad plates (16) are a number of bulges and/or recesses (17) that lie next to each other in the direction of the axial line of the drum-like body (4).

9. Device in accordance with claim 8, **characterised in that** the pitch of the Archimedes screw (8) is equal to or a is multiple of the distance between two adjacent bulges and/or recesses (17).

## Patentansprüche

1. Vorrichtung zum Schälen von Gemüse oder Obst mit einem trommelartigen Körper (4), der aus einer Anzahl nebeneinander liegender rechteckiger Schneidplatten (11) geformt ist, die Klingen (13) und einen Motor (9,10) aufweisen, um den trommelartigen Körper (4) in Drehrichtung anzutreiben, **dadurch gekennzeichnet, dass** mindestens zwei oder mehr nebeneinander liegende rechteckige Platten (22) von einer einzelnen breiten Platte (16) ersetzt werden.

2. Vorrichtung nach Anspruch 1, **dadurch gekennzeichnet, dass** die breite Platte (16) in Umfangsrichtung eine Abmessung aufweist, die weitestgehend der Abmessung in Umfangsrichtung der ersetzten Schneidplatten (11) entspricht.

3. Vorrichtung nach einem der Ansprüche 1 oder 2, **dadurch gekennzeichnet, dass** die Oberfläche der breiten Platte (16) die zur Innenseite der Trommel (4) zeigt, Auswölbungen und/oder Aussparungen (17) aufweist.

4. Vorrichtung nach Anspruch 3, **dadurch gekennzeichnet, dass** jede Auswölbung und/oder Aussparung (17) in der senkrecht zur Oberfläche verlaufenden Richtung der breiten Platten (16) weitestgehend eiförmig ist.

5. Vorrichtung nach einem der vorhergehenden Ansprüche, **dadurch gekennzeichnet, dass** der trommelartige Körper (4) eine archimedische Schraube (8) mit einem Durchmesser aufweist, der im Wesentlichen dem Innendurchmesser des trommelartigen Körpers (4) entspricht.

6. Vorrichtung laut Anspruch 5, **dadurch gekennzeichnet, dass** die archimedische Schraube (8) ortsfest ist.

7. Vorrichtung laut Anspruch 5, **dadurch gekennzeichnet, dass** die archimedische Schraube (8) mit einer Geschwindigkeit angetrieben wird, die von der Rotationsgeschwindigkeit des trommelartigen Körpers (4) abweicht.

8. Vorrichtung laut Anspruch 4 und einem der Ansprüche 5, 6 oder 7, **dadurch gekennzeichnet, dass** eine Anzahl von Auswölbungen und/oder Aussparungen (17) auf jeder breiten Platte (16) angeordnet sind, die nebeneinander in der Richtung der Achslinie des trommelartigen Körpers (4) liegen,

9. Vorrichtung lauf Anspruch 8, **dadurch gekennzeichnet, dass** die Spitze der archimedischen Schraube (8) gleich oder ein Vielfaches des Abstands zwischen zwei nebeneinander liegenden Auswölbungen/Aussparungen (17) ist.

## Revendications

1. Dispositif pour éplucher des végétaux ou des fruits comprenant un corps en forme de tambour (4) constitué d'un nombre de plaques de coupe (11) avec des lames (13) et avec un moteur (9, 10) pour l'entraînement par rotation du corps en forme de tambour (4), **caractérisé en ce qu'**au moins deux ou plusieurs plaques rectangulaires adjacentes (11) sont remplacées par une seule plaque large (16).

2. Dispositif, conformément à la revendication 1, **caractérisé en ce que** la plaque large (16) présente une dimension suivant la direction de sa circonférence qui correspond largement avec la dimension aperçue suivant la direction de la circonférence des plaques de coupe remplacées (11).

3. Dispositif, conformément aux revendications 1 ou 2, **caractérisé en ce que** la surface des plaques larges (16) situées vers la partie intérieur du tambour (4) est constituée de renflements et/ ou de chambrages (17).

4. Dispositif, conformément à la revendication 3, **caractérisé en ce que** chaque renflement et/ ou chambrage (17) aperçu suivant la direction perpendiculaire à la surface de la plaque large (16) est convenablement ovoïde.

5. Dispositif, conformément à l'une quelconque des revendications précédentes, **caractérisé en que**, dans sa partie interne, le corps en forme de tambour (4) est constitué d'une vis d'Archimède (8) avec un diamètre qui correspond principalement au diamètre interne du corps en forme de tambour (4).

6. Dispositif, conformément à la revendication 5, **caractérisé en ce que** la vis d'Archimède (8) est stationnaire.

7. Dispositif, conformément à la revendication 5, **caractérisé en ce que** la vis d'Archimède (8) est entraînée à une vitesse différente de la fréquence de rotation du corps en forme de tambour (4).

8. Dispositif, conformément à la revendication 4 et à l'une quelconque des revendications 5, 6 ou 7, **caractérisé en ce que** la disposition sur chaque plaque large (16) est un nombre de renflements et/ou de chambrages (17) situés, l'un à côté de l'autre, suivant la direction de la ligne axiale du corps en forme de tambour (4).

9. Dispositif conformément à la revendication 8, **caractérisé en ce que** le pas de la vis d'Archimède (8) est équivalent ou est un multiple de la distance existante entre deux renflements et/ou chambrages adjacents (17).
